# NEUE EUROPÄISCHE PATENTSCHRIFT

(11) **EP 0 832 521 B3**
(45) Veröffentlichungstag dieser Patentschrift: **15.01.2014**
(45) Hinweis auf die Patenterteilung: 02.12.1998
(21) Anmeldenummer: 97906097.7
(22) Anmeldetag: 19.02.1997
(51) Int. Cl.: H04B 1/66

(54) **VERFAHREN ZUM CODIEREN EINES MIT EINER NIEDRIGEN ABTASTRATE DIGITALISIERTEN AUDIOSIGNALS**
PROCESS FOR ENCODING AN AUDIO SIGNAL DIGITALISED AT A LOW SAMPLING FREQUENCY
PROCEDE DE CODAGE D'UN SIGNAL AUDIO NUMERISE AVEC UNE BASSE FREQUENCE D'ECHANTILLONNAGE

(30) Priorität: 04.04.1996 DE 19613643
(43) Veröffentlichungstag der Anmeldung: 01.04.1998
(73) Patentinhaber: Fraunhofer-Gesellschaft zur Förderung der angewandten Forschung e.V., 80636 München (DE)
(72) Erfinder: KUNZ, Oliver, Dipl.-Ing., D-96145 Sesslach (DE); DIETZ, Martin, Dipl.-Ing., D-90408 Nürnberg (DE); BUCHTA, Rainer, Dipl.-Ing., D-91074 Herzogenaurach (DE); ZELLER, Jürgen, Dipl.-Ing., D-91056 Erlangen (DE); BRANDENBURG, Karlheinz, Dr.-Ing., D-91054 Erlangen (DE); SIELER, Martin, Dipl.-Ing., D-91207 Lauf (DE); GERHÄUSER, Heinz, Dr.-Ing., D-91344 Waischenfeld (DE)
(74) Vertreter: Schoppe, Fritz
(86) Internationale Anmeldenummer: PCT/EP1997/000792
(87) Internationale Veröffentlichungsnummer: WO 1997/038497

(56) Entgegenhaltungen:
- EP-A- 0 457 391
- EP-A- 0 525 774
- EP-A- 0 612 159

## Beschreibung

Die vorliegende Erfindung befaßt sich mit einem Verfahren zum Codieren eines mit einer niedrigen Abtastrate digitalisierten Audiosignals. Insbesondere befaßt sich die Erfindung mit einem gegenüber dem Standard ISO-MPEG2 Layer 3 nur wenig modifizierten Codierungsverfahren, das es ermöglicht, Audiosignale, die mit einer gegenüber der Abtastrate nach dem Standard ISO-MPEG2 Layer 3 niedrigeren Abtastrate digitalisiert sind, mit einer niedrigen Bitrate zu übertragen.

Der existierende Standard ISO 13818-3 (MPEG2-Audio) definiert mit dem Layer 3 ein Codierverfahren für Signale mit Abtastfrequenzen zwischen 24 kHz und 16 kHz und ermöglicht Bitraten bis hinunter zu 8 kbit/s. Insbesondere bei dieser sehr niedrigen Bitrate, welche für eine Übertragung beispielsweise in Computernetzen sehr attraktiv ist, wäre die Nutzung noch geringerer Abtastfrequenzen wünschenswert. Diese stellt jedoch der genannte Standard nicht zur Verfügung.

Ausgehend von diesem Stand der Technik liegt der vorliegenden Erfindung daher die Aufgabe zugrunde, das genannte Verfahren zum Codieren von Audiosignalen in der Weise weiterzubilden, daß bei möglichst geringer Abweichung vom Standard eine Abtastung mit nicht standardkonformen Abtastraten vorgenommen werden kann, wobei eine Decodierung mit existierenden Decodern ohne größeren Anpassungsaufwand möglich sein soll.

Diese Aufgabe wird durch ein Verfahren gemäß Patentanspruch 1 gelöst.

Allgemein sieht die Erfindung vor, Audiosignale zu codieren, die mit einer Abtastrate digitalisiert sind, welche gegenüber der Abtastrate gemäß Standard ISO-MPEG2 Layer 3 niedriger ist.

Allgemein werden beim Erfindungsgegenstand ebenso wie bei dem bekannten Standard die nebeneinanderliegenden Frequenzlinien des digitalisierten Audiosignals, die einem Skalenfaktorband zugeordnet sind, mit dem gleichen Skalenfaktor codiert, der zusammen mit dem codierten Skalenfaktorband übertragen wird.

In weitere Übereinstimmung mit dem bekannten Verfahren gemäß dem genannten Standard bilden nebeneinanderliegende Skalenfaktorbänder eine Region, innerhalb der alle Skalenfaktoren mit einer jeweils gleichen Bitzahl codiert sind, welche sich nach dem größten Skalenfaktor dieser Region bestimmt.

Bei dem Standard ISO-MPEG2 Layer 3 sind allen Skalenfaktorbändern aller Regionen Skalenfaktoren zugeordnet. Lediglich das letzte Band, in dem die bei der gewünschten Einteilung der Frequenzlinien verbleibenden restlichen Frequenzlinien liegen, hat bei der Codierung nach dem genannten Standard keinen Skalenfaktor.

Die Erfindung sieht im Gegensatz zum Standard vor, daß zumindest die Frequenzlinien der obersten Region von Skalenfaktorbändern mit dem Skalenfaktor 0 codiert sind, so daß für die zumindest oberste Region kein Skalenfaktor codiert und übertragen wird. Die durch den entfallenen Skalenfaktor bzw. die entfallenen Skalenfaktoren eingesparten Bits werden für die gegenüber dem Standard feinere Quantisierung der Frequenzlinien im übrigen Spektrum verwendet.

Gemäß einem weiteren wichtigen Aspekt der Erfindung ist die Einteilung der Frequenz linien in Skalenfaktorbänder gegenüber dem genannten Standard derart modifiziert, daß die Skalenfaktorbandbreiten innerhalb der obersten Region gegenüber den Skalenfaktorbandbreiten der obersten Region nach dem Standard ISO-MPEG2 Layer 3 reduziert sind.

Nachfolgend wird ein bevorzugtes Ausführungsbeispiel des erfindungsgemäßen Verfahrens näher erläutert.

Bei dem Ausführungsbeispiel des erfindungsgemäβen Verfahrens wird ein gegenüber dem standardmäßigen MPEG-Frame-Header modifizierter Frame-Header verwendet, um für einen Decoder die nicht-standardkonforme Abtastrate und die nicht-standardkonforme Codierung zu signalisieren. Zu diesem Zweck wird innerhalb des Headers statt des hexadezimalen Syncwortes "FFF" (hexadezimal für zwölf Einsen) das Syncwort "FFE" (elf Einsen und eine Null) eingeführt. Erkennt ein Decoder ein derart modifiziertes Syncwort, so ist dies ein Hinweis dafür, daß der Bitstrom ein Signal enthält, welches gegenüber dem Standard MPEG2 mit der vorzugsweise halben Abtastrate digitalisiert wurde (12 kHz, 11,025 kHz oder 8 kHz). Ansonsten bleibt die Struktur des Bitstroms gegenüber dem Standard unverändert.

Bei dem hier zu diskutierenden Ausführungsbeispiel mit einer Abtastrate von 8 kHz wird ferner die Einteilung der Frequenzlinien in Skalenfaktorbänder modifiziert. Dabei wird eine Konstruktion im Bitstromformat des Layer 3 ausgenutzt, mit deren Hilfe sich die Zahl der für die Codierung des Spektrums zur Verfügung stehenden Bits vergrößern läßt.

Beispielsweise werden bei dem Standard MPEG2 Layer 3 einundzwandzig Skalenfaktorbänder im Falle von sogenannten Long Blocks bzw. dreimal zwölf Skalenfaktorbänder im Falle von sogenannten Short Blocks in jeweils vier Regionen aufgeteilt, nämlich 6-5-5-5-Skalenfaktorbänder pro Region für Long Blocks und 9-9-9-9-Skalenfaktorbänder für Short Blocks. In jeder dieser Regionen werden die Skalenfaktoren mit so vielen Bits codiert, wie für den größten Skalenfaktor der jeweiligen Region notwenig sind. Über den Wert "scalefaccompress" in der Seiteninformation des Bitstroms wird signalisiert, welche Region mit wieviel Bits codiert wurde.

Bei dem erfindungsgemäßen Verfahren wird für die Abtastrate 8 kHz die Tabelle der Skalenfaktorbandbreiten so verändert, daß die oberste Region im Spektrum nur sehr wenige Linien beinhaltet, die in der Regel aufgrund von Bandbreitenbeschränkungen ohnehin nicht oder nur wenig genutzt werden.

Erfindungsgemäß werden die Skalenfaktoren der Skalenfaktorbänder der obersten Region ausnahmslos auf Null gesetzt, so daß keine Codierung der Skalenfaktoren erforderlich ist.

Aufgrund der so frei gewordenen Bits stehen zusätzliche Bits für die Quantisierung des Spektrums zur Verfügung.

Effektiv wird bei dem erfindungsgemäßen Verfahren gemäß diesem Ausführungsbeispiel das Spektrum also in 17 Skalenfaktorbänder eingeteilt, ohne daß jedoch die Bitstromsyntax des Standards MPEG2 verlassen werden muß.

Die Tabellen für die Skalenfaktorbandbreiten sind nachfolgend wiedergegeben. Die erstgenannte Tabelle für die Breiten der Skalenfaktorbänder für 16 kHz Abtastrate entspricht dem Standard ISO-MPEG2 Layer 3. Die zweitgenannte Tabelle ist gemäß der Lehre der Erfindung für die 8 kHz Abtastrate modifiziert.

### Breiten der Skalenfaktorbänder für 16 kHz Abtastrate (zum Vergleich gemäß Standard)

Long Blocks
6,6,6,6,6,6,8,10,12,14,16,20,24,28,32,38,46,52,60,68, 58,54

Short Blocks
4,4,4,6,8,10,12,14,18,24,30,40,18 8

### Breiten der Skalenfaktorbänder für 8 kHz Abtastrate

Long Blocks
12,12,12,12,12,12,16,20,24,28,32,40,48,56,64,76,90, 2,2,2,2,2

Short Blocks
8,8,8,12,16,20,24,28,36,2,2,2,26

Man erkennt, daß die letzten Skalenfaktorbandbreiten bei dem erfindungsgemäßen Verfahren gegenüber dem bekannten Verfahren nach Standard deutlich verkleinert wurden. Im Falle der Codierung mit Long Blocks sind die letzten 100 Frequenzlinien ohne Skalenfaktor codiert. Dies entspricht einer Einschränkung der möglichen Bandbreite von 4000 Hz auf 3300 Hz. Der gewünschte Effekt kann also erzielt werden, falls die genutzte Bandbreite kleiner als 3300 Hz ist, was bei einer Bitrate von 8 kbit/s, für welche die 8 kHz Abtstrate gedacht ist, sicherlich sinnvoll ist.

## Patentansprüche

1. Verfahren zum Codieren eines mit einer niedrigen Abtastrate digitalisierten Audiosignales,
bei dem jeweils mehrere nebeneinanderliegende Frequenzlinien des digitalisierten Audiosignals, die einem Skalenfaktorband zugeordnet sind, mit dem gleichen Skalenfaktor codiert werden;
bei dem nebeneinanderliegende Skalenfaktorbänder eine Region bilden, innerhalb der alle Skalenfaktoren mit einer jeweils gleichen Bitzahl codiert sind, welche nach dem größten Skalenfaktor der Region bestimmt ist;
bei dem die Frequenzlinien zumindest der obersten Region von Skalenfaktorbändern mit dem Skalenfaktor 0 codiert werden und bei dem für die zumindest oberste Region kein Skalenfaktor codiert wird;
bei dem ein gegenüber dem MPEG-Frame-Header modifizierter Frame-Header zu einem Decoder übertragen wird, um eine nicht mit dem Standard ISO-MPEG2 Layer 3 konforme Abtastrate und Codierung dem Decoder zu signalisieren; und
bei dem eine Decodierung in dem Decoder gemäß der durch den Frame-Header signalisierten nicht-standardkonformen Abtastrate und Codierung durchgeführt wird.

2. Verfahren nach Anspruch 1, bei dem die gegenüber dem Standard ISO-MPEG2 Layer 3 durch die entfallenen Skalenfaktoren für die zumindest oberste Region eingesparten Bits für eine gegenüber dem Standard feinere Quantisierung der Frequenzlinien verwendet werden.

3. Verfahren nach Anspruch 1 oder 2, bei dem die Einteilung der Frequenzlinien in Skalenfaktorbänder gegenüber dem Standard ISO-MPEG2 Layer 3 derart modifiziert ist, dass die Skalenfaktorbandbreiten innerhalb der obersten Region gegenüber den Skalenfaktorbandbreiten der obersten Region nach diesem Standard reduziert sind.

4. Verfahren nach Anspruch 1, bei dem der Frame-Header das Syncwort mit dem Hexcode "FFE" aufweist.

## Claims

1. Method for coding an audio signal digitized at a low sampling rate,
wherein in each case a number of successive frequency lines of the digitized audio signal which are assigned to a scale factor band are coded with the same scale factor;
wherein successive scale factor bands form a region within which all the scale factors are each coded with the same number of bits, which is determined according to the largest scale factor of the region; and wherein the frequency lines at least of the highest region of scale factor bands are coded with the scale factor 0 and wherein no scale factor is coded for at least the highest region;
wherein a frame header which is a modification of the MPEG frame header is transmitted to a decoder to signalize to said decoder the sampling rate and coding, which do not comply with the Standard ISO-MPEG2 layer 3; and
wherein decoding in the decoder is performed in accordance with the sampling rate and coding not compliant with the standard, which are signalized by the frame header.

2. Method according to claim 1, wherein the bits which are saved, as compared to the Standard ISO-MPEG2 layer 3, through the missing scale factors for at least the highest region are used for finer quantization, as compared to the Standard, of the frequency lines.

3. Method according to claim 1 or 2, wherein the grouping of the frequency lines into scale factor bands is modified relative to the Standard ISO-MPEG2 layer 3 in such a way that the scale factor bandwidths within the highest region are reduced relative to the scale factor bandwidths of the highest region according to this Standard.

4. Method according to claim 1, wherein the frame header comprises the sync word with the "FFE" hex code.

## Revendications

1. Procédé de codage d'un signal audio numérisé avec une basse fréquence d'échantillonnage,
dans lequel chaque fois plusieurs lignes de fréquence adjacentes du signal audio numérisé associées à une bande de facteurs d'échelle sont codées avec le même facteur d'échelle;
dans lequel des bandes de facteurs d'échelle adjacentes forment une région dans laquelle tous les facteurs d'échelle sont codés chacun avec un même nombre de bits qui est déterminé d'après le facteur d'échelle le plus grand de la région; et
dans lequel les lignes de fréquence au moins de la région supérieure de bandes de facteurs d'échelle sont codées avec le facteur d'échelle 0 et dans lequel il n'est pas codé de facteur d'échelle pour la région au moins supérieure;
dans lequel il est transmis à un décodeur un support d'image modifié par rapport au support d'image MPEG, pour signaler au décodeur un débit binaire et une codification non conformes à la norme ISO-MPEG2 Layer 2; et
dans lequel un décodage est réalisé dans le décodeur selon le débit binaire et la codification non conformes à la norme signalés par le support d'image.

2. Procédé suivant la revendication 1, dans lequel les bits gagnés, par rapport & la norme ISO-MPEG2 Layer 3, par les facteurs d'échelle omis pour la région au moins supérieure sont utilisés pour une quantification des lignes de fréquence plus fine, comparé à la norme.

3. Procédé suivant la revendication 1 ou 2, dans lequel la division des lignes de fréquence en bandes de facteurs d'échelle est modifiée par rapport à la norme ISO-MPEG2 Layer 3 de telle sorte que les largeurs de bande de facteurs d'échelle dans la zone supérieure sont réduites par rapport aux largeurs de bande de facteurs d'échelle de la zone supérieure selon cette norme.

4. Procédé suivant la revendication 1, dans lequel le support d'image présente le mot sync avec le code hexadécimal "FFE".
